# FASCICULE DE BREVET EUROPEEN

(11) **EP 2 694 568 B1**
(45) Date de publication et mention de la délivrance du brevet: **25.11.2015**
(21) Numéro de dépôt: 12718694.8
(22) Date de dépôt: 05.04.2012
(51) Int. Cl.: C08G 64/02, C08G 64/30

(54) **PROCEDE DE FABRICATION DE POLYCARBONATE A PARTIR DE DERIVES DE DIANHYDROHEXITOLS PORTANT DEUX FONCTIONS CARBONATE D'ALKYLE**
VERFAHREN ZUR HERSTELLUNG VON POLYCARBONAT AUS DERIVATEN VON DIANHYDROHEXITOLEN MIT ZWEI ALKYLCARBONATFUNKTIONEN
PROCESS FOR MANUFACTURING POLYCARBONATE FROM DERIVATIVES OF DIANHYDROHEXITOLS BEARING TWO ALKYL CARBONATE FUNCTIONS

(30) Priorité: 05.04.2011 FR 1152951
(43) Date de publication de la demande: 12.02.2014
(73) Titulaire: Roquette Frères, 62136 Lestrem (FR)
(72) Inventeur: IBERT, Mathias, F-59930 La Chapelle D'armentieres (FR); JOSIEN, Emilie, F-62350 St Venant (FR); WYART, Hervé, F-62149 Cuinchy (FR)
(74) Mandataire: Cabinet Plasseraud
(86) Numéro de dépôt international: PCT/FR2012/050749
(87) Numéro de publication internationale: WO 2012/140353

(56) Documents cités:
- WO-A1-2011/039483
- DATABASE CA [Online] CHEMICAL ABSTRACTS SERVICE, COLUMBUS, OHIO, US; KAWAKAMI, SATOSHI ET AL: "Thermoplastic molding material containing polycarbonate involving saccharide residue", XP002660905, extrait de STN Database accession no. 139:308542 -& JP 2003 292603 A (MATSUSHITA ELECTRIC INDUSTRIAL CO., LTD., JAPAN) 15 octobre 2003 (2003-10-15)
- SABER CHATTI, GERT SCHWARZ, HANS R. KRICHELDORF: "Cyclic and Noncyclic Polycarbonates of Isosorbide (1,4:3,6-Dianhydro-D-glucitol)", MACROMOLECULES, vol. 39, no. 26, 1 décembre 2006 (2006-12-01), pages 9064-9070, XP055009118, ISSN: 0024-9297, DOI: 10.1021/ma0606051

## Description

L'invention a pour objet un nouveau procédé de fabrication de polycarbonate présentant les avantages qui vont être décrits ci-après.

Le développement de polymères issus de ressources biologiques renouvelables à court terme est devenu un impératif écologique et économique, face à l'épuisement et à la montée des prix des ressources fossiles telles que le pétrole.

Dans ce contexte, l'utilisation de dianhydrohexitols, issus de (poly)saccharides végétaux, en tant que monomères dihydroxylés pour la fabrication de polymères par polycondensation, semble être une approche prometteuse de remplacement de monomères d'origine pétrochimique.

Parmi ces polymères, les polycarbonates sont des matériaux thermoplastiques amorphes qui présentent des propriétés intéressantes, en particulier des propriétés mécaniques ou optiques avantageuses. Classiquement, ils sont obtenus par polycondensation de diols et de carbonate de diphényle, de phosgène ou de diphosgène.

A titre d'exemple, la préparation de polycarbonates à base de dianhydrohexitols a été décrite dans la demande de brevet EP 2033981 A1. Ce document décrit la polycondensation d'un mélange d'isosorbide, d'au moins un deuxième diol alicyclique et de carbonate de diphényle.

Le procédé présente l'inconvénient de générer du phénol, composé toxique, en quantité importante en tant que sous-produit de la réaction de polymérisation.

Un autre exemple de procédé de fabrication de polycarbonate à base d'isosorbide est également décrit dans l'article de Saber CHATTI, intitulé « Cyclic and Noncyclic Polycarbonates of Isosorbide (1,4 :3,6-dianhydro-D-glucitol) », dans Macromolecules, 2006, 9061-9070. Les seuls procédés permettant effectivement la fabrication de polycarbonate utilisent quant à eux des réactifs ou solvants toxiques, voire très toxiques, tels que le phosgène, le diphosgène, la pyridine ou le bis-chloroformiate.

On peut également citer la demande de brevet US 2004/0241553 A1 qui décrit un électrolyte conducteur d'ions, à base d'un composé comprenant des groupements carbonate de dianhydrohexitol et un sel électrolyte. Le composé pour électrolyte à base de carbonate de dianhydrohexitol peut être, ou non, un polymère.

Un intermédiaire pour la fabrication de ce composé pour électrolyte, décrit à la formule (6) de ce document, est choisi parmi certains dialkylcarbonates de dianhydrohexitol et le diphénylcarbonate de dianhydrohexitol. Toutefois, selon la variante où ce composé est un polymère, il est toujours fabriqué à partir de diphénylcarbonate de dianhydrohexitol.

Le procédé de fabrication de ce composé polymérique génère également du phénol.

Le polymère est obtenu par copolymérisation avec un monomère choisi parmi les diols aliphatiques et les éthers oligomères. Il en résulte ainsi un polymère flexible, cette flexibilité étant une condition nécessaire pour obtenir une bonne conductivité ionique de l'électrolyte.

Il existe donc encore à ce jour un besoin de trouver de nouvelles voies de fabrication de polycarbonates.

En particulier, il est avantageux de trouver des procédés générant des composés moins toxiques que ceux habituellement générés lors des procédés classiques de synthèse.

Il est également avantageux que ce procédé utilise des réactifs peu toxiques.

Au cours de ses recherches, la Demanderesse a réussi la mise au point d'un nouveau procédé d'obtention de polycarbonate comprenant des motifs issus de dérivés particuliers de dianhydrohexitols, qui permet de répondre à au moins un des problèmes exposés ci-dessus.

En effet, en utilisant le procédé selon l'invention, il est possible de ne pas générer de phénol lors du procédé de fabrication, mais des alcools moins toxiques.

De plus, le procédé permet de s'affranchir également de l'utilisation de réactifs toxiques tels que le phosgène et ses dérivés.

La présente invention concerne plus particulièrement un procédé de fabrication d'un polycarbonate, caractérisé en ce qu'il comprend :
- une étape (1) d'introduction, dans un réacteur, d'une composition (A) comprenant au moins un carbonate de dianhydrohexitol portant deux fonctions carbonate d'alkyle, ladite composition (A) comprenant par rapport à la somme de (A1) et (A2) :
   ▪de 0 à 99,9% en poids, préférentiellement de 70 à 99,9% en poids, de monomères (A1) de formule : 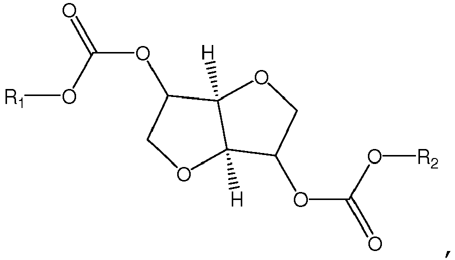 ▪ et de 0,1 à 100% en poids, préférentiellement de 0,1 à 30% en poids, de monomères (A2) de formule,: 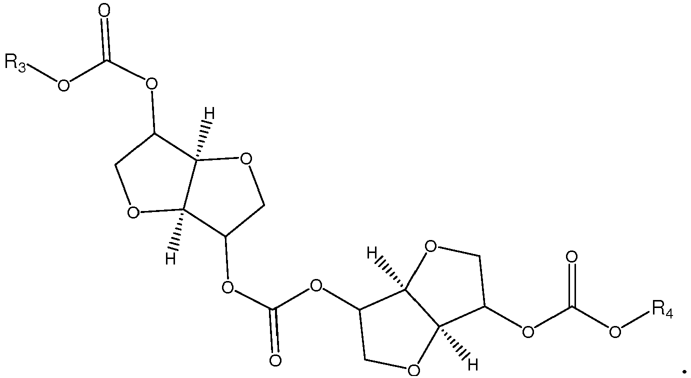 et R1, R2, R3 et R4 étant des groupements alkyle identiques ou différents ;
- une étape (2) d'introduction d'un diol ou d'un mélange de diols (B) ;
- une étape (3) ultérieure de polycondensation par transestérification du mélange de monomères comprenant (A2), (B) et éventuellement (A1) ;
- une étape (4) de récupération du polycarbonate formé lors de l'étape (3) ;
ledit polycarbonate récupéré à l'étape (4) présentant une température de transition vitreuse supérieure our égale à 25°C.

La Demanderesse a également constaté que ce procédé particulier permet la fabrication d'un polycarbonate de température de transition vitreuse (Tᵥ) plus élevée que celle d'un polycarbonate fabriqué dans les mêmes conditions, mais en l'absence de (A2), c'est-à-dire avec une composition (A) constituée uniquement de monomère (A1).

Le procédé selon l'invention permet la fabrication de polycarbonates utiles dans tout type d'application, y compris dans les applications les plus exigeantes comme par exemple la fabrication de pièces nécessitant une rigidité importante.

Il est précisé que selon la variante où le mélange de monomères utilisé à l'étape de polycondensation par transestérification comprend (A1), cela signifie bien évidemment que la quantité en poids de (A2) dans la composition (A) est inférieure à 100%, par exemple allant de 0,1% à 99,9%.

La Demanderesse a constaté que la température de transition vitreuse est particulièrement importante lorsque la composition (A) comprend, rapporté au poids total des monomères (A1) et (A2), de 70 à 99,9% de (A1) et de 0,1 à 30% de (A2).

Les groupements alkyle R1, R2, R3 et R4 portés par les monomères (A) peuvent comprendre de 1 à 10 atomes de carbone, avantageusement de 1 à 6, de préférence de 1 à 4, tout particulièrement sont choisis parmi les groupements méthyle et éthyle.

Préférentiellement, les carbonates de dianhydrohexitol de la composition (A) sont des dérivés d'isosorbide.

Avantageusement, la composition (A) introduite lors de l'étape (1) comprend, par rapport au poids total des monomères (A1) et (A2) :
▪ de 75 à 99%, avantageusement de 80 à 97%, par exemple de 85 à 95% de (A1); et
▪ de 1 à 25%, avantageusement de 3 à 20%, par exemple de 5 à 15% de (A2),
car elle permet d'obtenir un polycarbonate présentant une température de transition vitreuse particulièrement élevée.

Le monomère (B) est avantageusement constitué d'un mélange de diols comprenant au moins 1% en moles d'un ou plusieurs diols cycliques, par exemple au moins 20%, voire au moins 50%, préférentiellement au moins 80%. (B) est tout préférentiellement constitué d'un ou plusieurs diols cycliques.

L'utilisation de ce diol ou mélange de diols préféré permet également d'obtenir un polycarbonate de température de transition vitreuse plus élevée.

Le diol cyclique qui peut être compris dans (B) est préférentiellement non aromatique.

Avantageusement, le diol cyclique de (B) comprend des cycles à 5 ou 6 chaînons. Il est préférentiellement choisi parmi l'isosorbide, l'isomannide, l'isoidide, le 1,2-cyclohexanediméthanol, le 1,3-cyclohexanediméthanol, et le 1,4-cyclohexanediméthanol.

Selon le procédé de l'invention, le ratio molaire de (A) / (B) va avantageusement de 0,7 à 1,3, préférentiellement de 0,8 à 1,25, par exemple de 0,9 à 1,1.

Selon un mode avantageux du procédé de l'invention, la somme de (A1), (A2) et (B) constitue plus de 60% en moles de la totalité des monomères introduits dans le réacteur, par exemple plus de 90% en moles. La composition (A) comprend préférentiellement plus de 75% en moles, de préférence plus de 90 % en moles, de monomères (A1) et (A2).

Le réacteur peut être régulé à une température allant de 100°C à 250°C durant l'étape (3), préférentiellement de 150 à 235°C.

Comme exposé ci-dessus, l'invention porte sur un procédé utilisant un mélange particulier de monomères (A1), (A2) et (B). Le type et les conditions de polycondensation par transestérification ne sont pas particulièrement limités. Cependant, l'étape (3) se fait avantageusement en présence d'un catalyseur connu de polycondensation par transestérification, avantageusement un catalyseur comprenant au moins un ion de métal alcalin ou de métal alcalino-terreux, un ion ammonium quaternaire, un ion phosphonium quaternaire, un composé azoté cyclique, un composé basique à base de bore ou un composé basique à base de phosphore.

Le catalyseur peut être tout spécialement choisi parmi le carbonate de césium, les triazoles, l'hydroxyde de tétraméthylammonium, tout préférentiellement le carbonate de césium. Le catalyseur de polycondensation éventuellement présent lors de l'étape (3) peut être présent dans des quantités molaires qui vont de 10⁻⁷% à 1%, préférentiellement de 10⁻⁴% à 0,5% en moles rapporté à la somme des monomères (A1) et (A2).

Avantageusement, l'étape (3) du procédé selon l'invention est réalisée sous atmosphère inerte, par exemple sous azote.

Selon un mode avantageux de réalisation du procédé, au moins une partie de l'étape (3) est réalisée à une pression allant de 30 kPa à 110 kPa, avantageusement de 50 à 105 kPa, préférentiellement de 90 à 105 kPa, par exemple à pression atmosphérique.

En effet, selon les procédés classiques, on doit réaliser la réaction de polycondensation par transestérification sous un vide assez important (généralement à une pression de 20 kPa maximum) pour pouvoir la conduire de manière satisfaisante. Le procédé de l'invention présente l'avantage de travailler sous vide peu important.

Selon le procédé de l'invention, le polycarbonate récupéré à l'étape (4) présente avantageusement une masse molaire en poids supérieure ou égale à 5000 g/mol, préférentiellement allant de 8000 à 200 000 g/mol.

Il présente une température de transition vitreuse supérieure ou égale à 25°C, par exemple supérieure ou égale à 50°C, avantageusement de 100 à 180°C, par exemple de 120 à 170°C. Comme expliqué ci-après dans la description détaillée, la température de transition vitreuse peut être ajustée par l'homme du métier, notamment en sélectionnant les monomères (A1), (A2) et (B) de manière adéquate.

L'obtention d'une température de transition vitreuse supérieure ou égale à 20°C, voire plus, permet l'obtention d'un polycarbonate rigide à température ambiante. Un matériau rigide peut présenter un module de Young à 25°C allant de 200 à 5000 MPa, par exemple de 1000 à 4000 MPa.

Le procédé selon l'invention permet de fabriquer un polycarbonate, qui présente les propriétés déjà exposées.

En particulier, le nouveau polycarbonate susceptible d'être obtenu par un procédé selon la présente invention présente les caractéristiques structurelles suivantes :
- il présente au moins une fonction terminale carbonate d'alkyle,
- et il comprend au moins 2 unités successives :

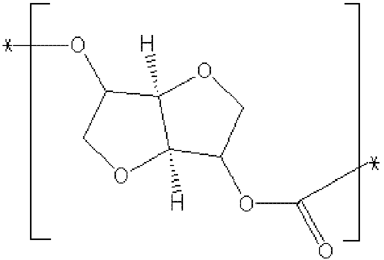

Un autre objet de l'invention porte sur l'utilisation pour la fabrication de polycarbonate d'une composition (A) telle décrite ci-dessus.

L'invention va être décrite plus en détail ci-dessous.

Par polycarbonate selon la présente invention, on entend tout polymère comprenant des motifs répétitifs, formés par la réaction de monomères, liés par des liaisons carbonate et en particulier les motifs répétitifs décrits ci-dessus. Ces motifs répétitifs sont formés par réaction des monomères (A1), (A2) et (B). Le polycarbonate peut présenter uniquement des motifs répétitifs liés par des liaisons carbonate (polycarbonate homopolymère); il peut également s'agir d'un copolymère présentant des motifs répétitifs liés par des liaisons carbonate et des motifs répétitifs liés par d'autres liaisons telles que les liaisons ester d'acide carboxylique ou uréthane.

Par « monomère », on entend dans la présente demande un composé présentant au moins deux fonctions susceptibles de réagir avec une fonction alcool ou une fonction carbonate d'alkyle dans une réaction de transestérification.

Comme expliqué précédemment, l'invention concerne un procédé de fabrication de polycarbonate faisant réagir les monomères (A2), (B) et éventuellement (A1) présentés ci-avant.

Le monomère (A1) peut être choisi dans le groupe formé par le dialkylcarbonate d'isosorbide, le dialkylcarbonate d'isomannide et le dialkylcarbonate d'isoidide.

Le monomère (A2) peut être décrit comme un dimère du monomère (A1). Selon le dianhydrohexitol utilisé, on peut obtenir une ou plusieurs conformations de dimères (A2). R1, R2, R3 et R4 portés par (A1) et (A2) sont des groupements alkyle, qui peuvent être linéaires ou ramifiés.

Le monomère (B) est un diol ou un mélange de diols.

Lorsqu'ils sont associés au terme « monomère » ou « dimère », les nombres « un » », « deux » ou « plusieurs » signifient dans la présente demande le nombre de monomères de type différents. A titre d'exemple, lorsqu'un monomère est introduit dans le réacteur ou réagit, cela ne signifie bien évidemment pas qu'une seule molécule est introduite ou réagit mais que plusieurs molécules d'un même type sont introduites ou réagissent.

La composition (A) contenant les monomères (A2) et éventuellement (A1) est placée dans le réacteur lors de l'étape d'introduction (1). Selon une première variante, la composition (A) comprend le mélange de deux monomères (A1) et (A2) déjà décrits. Selon une seconde variante la composition (A) comprend le monomère (A2) et est exempte de monomère (A1).

Le monomère (A1) peut être obtenu en utilisant par exemple les procédés déjà connus de fabrication de dialkylcarbonate de dianhydrohexitol.

On peut par exemple fabriquer le monomère (A1) par réaction de dianhydrohexitol et de chloroformiate d'alkyle, ces réactifs étant introduits dans un réacteur dans des proportions molaires de 1 : 2. Ce type de procédé est décrit par exemple dans le document JP 6-261774 à son exemple 5. Selon ce procédé, on ne forme que du dialkykcarbonate de dianhydrohexitol et aucun dimère (A2) n'est fabriqué.

On peut fabriquer le monomère (A2) en faisant réagir par exemple dans une première étape une mole de dianhydrohexitol avec une mole de chloroformiate d'alkyle afin de former du monoalkylecarbonate de dianhydrohexitol, puis dans une seconde étape une mole de phosgène avec deux moles du monoalkylecarbonate de dianhydrohexitol formé lors de la première étape.

On peut ainsi mélanger ces deux monomères (A1) et (A2) pour former la composition (A) soit préalablement avant leur introduction dans le réacteur, soit à l'intérieur du réacteur même.

Une possibilité avantageuse de fabriquer la composition (A) est d'utiliser un procédé permettant la synthèse simultanée de (A1) et (A2). En effet, la Demanderesse a également mis au point un procédé permettant de fabriquer un tel mélange. Ce procédé est décrit en détail dans la demande internationale n°PCT/FR2010/052066.

Ce procédé de préparation comprend, dans l'ordre, les étapes suivantes :
(a) préparation d'un mélange réactionnel initial contenant
   - au moins un dianhydrohexitol,
   - au moins 2 équivalents en moles, rapportés à la quantité de dianhydrohexitol présent, d'au moins un carbonate de dialkyle, et
   - un catalyseur de transestérification comme par exemple le carbonate de potassium,
(b) chauffage du mélange réactionnel jusqu'à une température supérieure ou égale à la température d'ébullition de l'alcool R-OH formé par la réaction de transestérification, ou supérieure ou égale à la température d'ébullition du mélange azéotropique que forme l'alcool R-OH obtenu avec un autre des composants présents dans le mélange réactionnel, et au plus égale à la température d'ébullition du mélange réactionnel, dans un réacteur muni d'une colonne de rectification comportant un nombre de plateaux théoriques de distillation suffisant pour séparer du mélange réactionnel l'alcool obtenu, ou l'azéotrope qu'il forme avec un autre des composants présents dans le mélange réactionnel.

La solution obtenue à la fin du procédé comprend un mélange de monomères (A1) et (A2) avec du carbonate de dialkyle. On réalise une distillation et on récupère le mélange de (A1) et (A2) exempt de carbonate de dialkyle. On peut faire varier le ratio (A1) / (A2) en modifiant le mélange réactionnel initial : celui-ci contient avantageusement de 2,1 à 100 équivalents molaires, de préférence de 5 à 60 équivalents molaires, et en particulier de 10 à 40 équivalents molaires de carbonate de dialkyle, rapportés à la quantité de dianhydrohexitol présent initialement dans le milieu réactionnel. Plus la quantité en carbonate de dialkyle est élevée, plus le ratio (A1) / (A2) dans la solution de monomères obtenus est également élevé.

Par exemple, la Demanderesse a constaté qu'en faisant réagir de l'isosorbide et du carbonate de diméthyle en présence de carbonate de potassium dans les conditions du procédé décrit ci-dessus, on pouvait obtenir une solution de monomères comprenant (A1) et (A2) avec un ratio (A1) / (A2) allant d'environ 4 (lorsque le ratio carbonate de dialkyle /isosorbide est de 10) à environ 20 (lorsque le ratio carbonate de dialkyle /isosorbide est de 40). De plus, ce procédé de synthèse simultanée de (A1) et (A2) présente les avantages d'utiliser des réactifs moins toxiques que le chloroformiate d'alkyle utilisé dans le procédé décrit dans le document JP 6-261774 par exemple ; les co-produits de synthèse sont également moins toxiques que les espèces chlorées émises lors de la synthèse avec du chloroformiate (méthanol dans le cas où l'alkyle est un méthyle, éthanol dans le cas où l'alkyle est un éthyle).

La composition (A) peut comprendre des monomères portant deux fonctions carbonates d'alkyle autres que (A1) et (A2). Plus particulièrement, elle peut comprendre des oligomères de (A1) de degré de polymérisation supérieur ou égal à 3.

Cependant, la composition (A) comprend avantageusement plus de 75% en moles, de préférence plus de 90 % en moles et encore plus préférentiellement plus de 98 % en moles de monomères (A1) et (A2).

La quantité de chacun des constituants de la composition (A) peut être déterminée par des méthodes chromatographiques, comme par exemple la Chromatographie en Phase Gazeuse (CPG).

On peut mesurer les quantités de chacun des constituants par CPG en faisant l'analyse sous forme de dérivés triméthylsilylés.

L'échantillon peut être préparé selon la méthode suivante : dans un bécher, peser 500 mg d'échantillon et 50 mg de glucose pentaacétate (étalon interne) de pureté connue. Ajouter 50 ml de pyridine et laisser agiter jusqu'à dissolution complète. Reprendre 1 ml dans un godet, ajouter 0,5 ml de bis-(triméthylsilyl)-trifluoroacétamide puis chauffer 40 minutes à 70°C.

Pour réaliser le chromatogramme, on peut utiliser un chromatographe VARIAN 3800 muni :
- d'une colonne DB1 d'une longueur de 30 m et de 0,32 mm de diamètre avec une épaisseur de film de 0,25µm,
- d'un injecteur de type 1177 équipé d'un focus liner avec laine de verre et chauffé à 300°C en utilisant un rapport de split de 30, le débit d'hélium étant de 1,7 mL/min,
- d'un détecteur FID chauffé à une température de 300°C réglé avec une sensibilité de 10⁻¹¹.

On peut introduire, en mode split, 1,2 µL de l'échantillon dans le chromatographe, la colonne étant chauffée de 100°C jusqu'à 320°C avec une rampe de 7°C/min puis un palier de 15 min à 320°C. Dans ces conditions d'analyse, lorsque A1 est un diméthylcarbonate d'isosorbide et A2 des dimères de A1, A1 a un temps de rétention relatif d'environ 0,74, A2 a un temps de rétention relatif allant d'environ 1,34 à 1,79, l'étalon interne ayant un temps de rétention d'environ 15,5 minutes.

A l'aide du chromatogramme, on peut calculer le pourcentage massique de chacun des constituants en déterminant la surface des pics correspondants et en calculant, pour chaque constituant, le rapport de la surface du pic lui correspondant sur l'ensemble des pics (à l'exception du pic de l'étalon interne).

L'addition de la composition (A) englobe également l'ajout séparé de ses constituants, que ce soit simultanément ou successivement.

On peut également utiliser une méthode de synthèse permettant la synthèse directe d'un mélange de (A1) et (A2), par exemple comme selon le procédé avantageux qui vient d'être décrit.

Le monomère (B) est, quant à lui, un diol ou un mélange de diols.

Le diol peut être cyclique ou non cyclique.

Comme diol non cyclique, on peut citer les diols alkyliques linéaires ou ramifiés. Ce diol non cyclique peut comprendre de 2 à 10 atomes de carbone, comme par exemple l'éthylène glycol, le 1,3-propanediol, le 1,4-butanediol, le 1,5-pentanediol, le 1,6-hexanediol, le 1,7-heptanediol, le 1,8-octanediol, le 1,9-nonanediol ou le 1,10-décanediol.

Le diol cyclique peut comprendre un ou plusieurs cycles, par exemple de 2 à 4 cycles, préférentiellement 2 cycles. Chaque cycle comprend préférentiellement de 4 à 10 atomes. Les atomes compris dans les cycles peuvent être choisis parmi le carbone, l'oxygène, l'azote ou le soufre. Préférentiellement, les atomes constitutifs du cycle sont le carbone ou le carbone et l'oxygène.

Le diol cyclique peut être aromatique ou non aromatique. Les diols aromatiques comprennent préférentiellement de 6 à 24 atomes de carbone. A titre d'exemple de diol aromatique, on peut citer le groupe des bisphénols tels que le 2,2-bis(4-hydroxyphényl)propane (bisphénol A), le 2,2-bis(3,5-diméthyl-4-hydroxyphényl)propane, le bis(4-hydroxyphényl)méthane (bisphénol F), le 1,1-bis(4-hydroxyphényl)cyclohexane (bisphénol C) et le 1,1-bis(4-hydroxyphényl)éthane (bisphénol AD).

Le diol cyclique non aromatique peut comprendre de 4 à 24 atomes de carbone, avantageusement de 6 à 20 atomes de carbone. Avantageusement, ce diol cyclique non aromatique est un dianhydrohexitol tel que l'isosorbide, l'isomannide et l'isoidide, les cyclohexanediméthanols tels que le 1,2-cyclohexanediméthanol, le 1,3-cyclohexanediméthanol, et le 1,4-cyclohexanediméthanol, les tricyclodécanediméthanols, les pentacyclopentanediméthanols, les décalindiméthanols tels que le 2,6-décalindiméthanol, le 1,5-décalindiméthanol et le 2,3-décalindiméthanol, les norbornanediméthanols tels que le 2,3-norbornanediméthanol et le 2,5-norbornanediméthanol, les adamantanediméthanols tels que le 1,3-adamantanediméthanol, les cyclohexanediols tels que le 1,2-cyclohexanediol, le 1,3-cyclohexanediol et le 1,4-cyclohexanediol, les tricyclodécanediols, les pentacyclopentadecanediols, les décalindiols, les norbornandiols ou les adamantanediols. Préférentiellement, le diol cyclique est choisi parmi l'isosorbide, l'isomannide et l'isoidide, le 1,2-cyclohexanediméthanol, le 1,3-cyclohexanediméthanol, et le 1,4-cyclohexanediméthanol.

Le ratio molaire (A1) + (A2) / (B) va avantageusement de 0,7 à 1,3, préférentiellement de 0,8 à 1,25, préférentiellement de 0,9 à 1,1, tout préférentiellement de 0,95 à 1,05.

Il est possible d'introduire selon le procédé de l'invention des monomères autres que (A1), (A2) et (B). On peut par exemple introduire des monomères comprenant plus de 2 fonctions alcool ou carbonate. On peut également introduire des monomères comprenant plusieurs fonctions choisies parmi la fonction acide carboxylique, ester d'acide carboxylique, amine ou des mélanges de ces fonctions.

En particulier, il est également possible d'introduire, simultanément avec les monomères portant deux fonctions carbonates d'alkyle, d'autres produits. Il peut s'agir de co-produits de synthèse des monomères (A1) et (A2). Ces produits peuvent être du monoalkylcarbonate de dianhydrohexitol, du dialkyléther de dianhydrohexitol, du monoalkyléther de dianhydrohexitol ou du monoalkyléther de dianhydrohexitol monoalkylcarbonate.

Il est également possible d'introduire des agents de terminaison de chaîne, qui sont des composés ne comprenant qu'une seule fonction susceptible de réagir avec une fonction alcool ou carbonate.

Cependant, sur la totalité des monomères introduits dans le réacteur, on préfère que la somme de (A1), (A2) et (B) constitue plus de 90% en moles de la totalité des monomères introduits, avantageusement plus de 95%, voire plus de 99%. Tout préférentiellement, les monomères introduits dans le réacteur sont essentiellement constitués des monomères (A1), (A2) et (B). Bien évidemment, on préfère limiter la quantité de carbonate de diaryle et de monomères halogénés introduits, par exemple à des quantités inférieures à 5% des moles totales de monomères introduites. Dans un mode de réalisation préféré, aucun carbonate de diaryle ni monomère halogéné n'est introduit dans le réacteur de polycondensation.

L'ordre des étapes d'introduction (1) et (2) n'est pas déterminante pour la présente invention. On peut réaliser l'étape (1) avant l'étape (2) ou *vice versa.* On peut également réaliser ces deux étapes simultanément. Selon une variante, on réalise un prémélange des monomères (A1), (A2) et (B) avant de les introduire dans le réacteur.

Pour permettre la formation du polycarbonate selon le procédé de l'invention, le monomère (A) réagit avec le monomère (B) par une réaction de transestérification, cette réaction étant conduite dans un réacteur. Cette réaction peut se faire en l'absence de catalyseur. La présence de celui-ci permet d'accélérer la réaction et/ou d'augmenter le degré de polymérisation du polycarbonate ainsi formé pendant l'étape (3).

En ce qui concerne le catalyseur de transestérification éventuellement utilisé lors de l'étape (3), il peut s'agir d'un catalyseur comprenant au moins un ion de métal alcalin ou de métal alcalino-terreux, un ion ammonium quaternaire, un ion phosphonium quaternaire, un composé azoté cyclique, un composé basique à base de bore ou un composé basique à base de phosphore.

A titre d'exemple de catalyseur comprenant au moins un ion de métal alcalin, on peut citer les sels de césium, de lithium, de potassium ou de sodium. Ces sels peuvent être en particulier des carbonates, des hydroxydes, des acétates, des stéarates, des borohydrures, des borures, des phosphates, des alcoolates ou des phénolates ainsi que leurs dérivés.

Comme catalyseur comprenant au moins un ion de métal alcalino-terreux, on peut citer les sels de calcium, de baryum, de magnésium ou de strontium. Ces sels peuvent être en particulier des carbonates, des hydroxydes, des acétates ou des stéarates ainsi que leurs dérivés.

En ce qui concerne les composés basiques à base de bore, il s'agit préférentiellement de sels de dérivés alkyliques ou phényliques de bore tels que le tétraphényle de bore.

Les catalyseurs comprenant des composés basiques à base de phosphore peuvent être des phosphines.

Les catalyseurs comprenant un ion ammonium quaternaire sont préférentiellement des hydroxydes tels que l'hydroxyde de tetraméthylammonium.

Les catalyseurs comprenant un composé azoté cyclique sont préférentiellement des dérivés triazole, tetrazole, pyrrole, pyrimidine, pyrazine, pyridazine, picoline, piperidine, pyridine, aminoquinoléine ou imidazole.

La quantité du catalyseur va avantageusement de 10⁻⁷% à 1% en moles, préférentiellement de 10⁻⁴% à 0,5% en moles rapporté à la quantité des monomères (A1) et (A2). Cette quantité peut être réglée en fonction du catalyseur utilisé. A titre d'exemple, on utilise préférentiellement de 10⁻³ à 10⁻¹% en moles de catalyseur comprenant au moins un ion de métal alcalin.

On peut éventuellement ajouter à la composition (A) et/ou au diol (B) des additifs tels que les stabilisants.

Le stabilisant peut être par exemple un composé à base d'acide phosphorique tel que les phosphates de trialkyle, à base d'acide phosphoreux tels que les dérivés phosphites ou phosphates, ou un sel de ces acides par exemple les sels de zinc ; ce stabilisant permet de limiter la coloration du polymère durant sa fabrication. Son usage peut être avantageux en particulier lorsqu'on réalise la polycondensation à l'état fondu. Cependant, leur quantité est généralement inférieure à 0,01% du total des moles en monomère (A) et (B).

Dans le procédé de fabrication de polycarbonate selon l'invention, on réalise l'étape de transestérification des monomères (A) et (B) lors de l'étape (3). Le type et les conditions de polymérisation ne sont pas particulièrement limités.

On peut réaliser cette réaction à l'état fondu, c'est-à-dire en chauffant le milieu réactionnel en l'absence de solvant. On peut également réaliser cette polymérisation en présence de solvant. On réalise de préférence cette réaction à l'état fondu.

Cette étape (3) est réalisée pendant un temps suffisant pour obtenir un polycarbonate. Avantageusement, la durée de l'étape (3) va de 1 heure à 24 heures, par exemple de 2 à 12 heures. Préférentiellement, le réacteur est thermorégulé durant l'étape (3) à une température allant de 100°C à 250°C, préférentiellement de 150 à 235°C.

Il est possible de conduire l'ensemble de l'étape (3) en isotherme. Cependant, on préfère généralement augmenter la température durant cette étape, soit par palier de température, soit en utilisant une rampe de température. Cette augmentation de température durant l'étape (3) permet d'améliorer la réaction de polycondensation par transestérification, c'est-à-dire d'augmenter la masse moléculaire du polycarbonate finalement obtenu, celui-ci présentant de plus une coloration plus faible que lorsque l'on réalise l'ensemble de l'étape (3) du procédé à sa température la plus haute.

On préfère bien entendu réaliser l'étape (3) sous atmosphère inerte, par exemple sous azote.

En utilisant les procédés classiques générant du phénol pendant la réaction de polycondensation, on doit, pour pouvoir éliminer ce phénol, faire l'ensemble de la réaction sous vide. Pour éliminer les alcools générés lors du procédé selon l'invention, le vide dans le réacteur n'est pas nécessaire car on peut distiller les alcools générés plus aisément que le phénol.

La Demanderesse a constaté que le procédé selon l'invention présente l'avantage que l'étape de polycondensation ne se fait pas nécessairement sous vide important. Ainsi, selon une variante du procédé de l'invention, au moins une partie de l'étape (3) est réalisée à une pression allant de 30 kPa à 110kPa, avantageusement de 50 à 105 kPa, préférentiellement de 90 à 105 kPa, par exemple à pression atmosphérique. Préférentiellement, au moins la moitié de la durée totale de l'étape (3) est réalisée à cette pression.

On peut cependant réaliser l'étape (3), pendant toute la durée ou pendant une partie sous vide un peu plus poussé, par exemple avec une pression à l'intérieur du réacteur comprise entre 100 Pa et 20 kPa. Bien évidemment, ce vide est réglé selon la température à l'intérieur du réacteur et le degré de polymérisation : lorsque le degré de polymérisation est bas, en cas de pression trop faible et de température trop élevée, la réaction ne peut pas se faire correctement car les monomères sont extraits du réacteur par distillation. Cette étape de vide un peu plus poussé peut être réalisée en fin de réaction, ce qui permet de plus d'éliminer une partie des espèces résiduelles.

A titre d'exemple, on peut réaliser le procédé en réalisant les différentes étapes successives suivantes :
- une première étape pendant 2 heures et 30 minutes à 170°C sous pression atmosphérique ;
- une seconde étape pendant 1 heure à 200°C sous pression atmosphérique ;
- une troisième étape pendant 1 heure à 220°C sous pression atmosphérique ;
- une quatrième étape pendant 1 heure à 235°C sous pression atmosphérique ;
- une cinquième étape pendant 1 heure à 235°C à une pression d'environ 300 Pa.

Grâce au procédé de l'invention, on peut obtenir un rendement massique, défini par le rapport de la masse de polycarbonate recupérée sur la masse de la somme des monomères mis en oeuvre, supérieur ou égal à 40%, avantageusement supérieur à 50%, de préférence supérieur à 55%.

Le réacteur est généralement équipé d'un moyen d'élimination des alcools générés au cours de la réaction de polycondensation, par exemple une tête de distillation reliée à un condenseur.

Le réacteur est généralement équipé d'un moyen d'agitation tel qu'un système d'agitation à pales.

Les monomères (A1), (A2) et (B) réagissent de manière statistique durant l'étape (3). Lorsque l'on réalise une seule introduction du monomère (B), on obtient donc un polycarbonate avec une répartition statistique des diols (B) dans le polymère. Toutefois, il est possible de réaliser une plusieurs étapes d'introductions supplémentaires de monomères (B), ceci après le démarrage de l'étape de transestérification condensation (3). Dans ce cas, si les monomères (B) introduits sont différents lors des différentes introductions, on obtient alors un polymère séquencé.

On peut réaliser le procédé de façon discontinue (par « batch »), de façon continue, ou de façon semi-continue semi-discontinue.

On récupère le polycarbonate formé lors du procédé lors de l'étape (4). Ce polycarbonate peut être directement transformé sous forme de granulés à l'aide d'un granulateur ou sous toute autre forme. Il est possible d'effectuer une purification du polymère ainsi obtenu dans une étape ultérieure à l'étape (4), par exemple par dissolution du polymère dans un solvant tel que le chloroforme puis précipitation par ajout d'un non solvant tel que le méthanol.

Un autre avantage du procédé de l'invention est que l'on peut obtenir un rendement massique, défini par le rapport de la masse de polycarbonate récupérée sur la masse de la somme des monomères mis en oeuvre, élevé, par exemple supérieur ou égal à 40%, avantageusement supérieur à 50%, de préférence supérieur à 55%.

Le polycarbonate susceptible d'être obtenu par le procédé selon l'invention est différent des polycarbonates déjà connus de l'article de Chatti et al. déjà cité en ce qu'il comprend au moins une fonction terminale carbonate d'alkyle et au moins 2 unités successives :

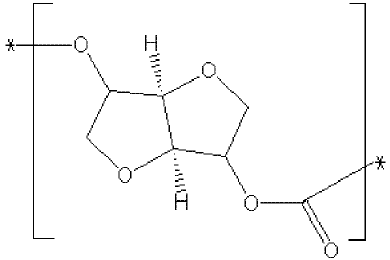

On peut déterminer la présence de ces fonctions terminales et unités successives par des techniques d'analyse telles que la résonance magnétique nucléaire du ¹³C et du ¹H.

Avantageusement, la température de transition vitreuse du polycarbonate formé est supérieure ou égale à 25°C, par exemple va de 50 à 180°C. On peut ajuster la température de transition vitreuse du polycarbonate en faisant varier les conditions de synthèse. Par exemple, en sélectionnant un ratio de monomères (A) / (B) très proche de 1, on obtient un polycarbonate présentant une température de transition vitreuse supérieure à celle d'un polycarbonate obtenu dans les mêmes conditions mais avec un rapport (A) / (B) assez différent de 1. La température de transition vitreuse varie également de manière très significative avec la nature du monomère (B). En effet, si l'on souhaite obtenir un polycarbonate présentant une température sensiblement élevée, on préfère utiliser, au moins en partie, des diols cycliques plutôt que des diols linéaires.

La température de transition vitreuse peut être mesurée par analyse calorimétrique différentielle. Par exemple, on utilise un appareil de type Mettler DSC 30, équipé de creusets en aluminium, calibré en température et flux de chaleur avec de l'indium (par exemple réf 119441). On pèse environ 15 mg de l'échantillon dans un creuset en aluminium percé. On peut procéder de la manière suivante : Le creuset est introduit dans le four sous flux d'azote, à la température de 25°C.

Une rampe de refroidissement rapide est appliquée de 25°C à -100°C.

Une rampe de chauffage à 10°C/min est appliquée de -100°C à 200°C.

Une nouvelle rampe de refroidissement rapide est appliquée de 200°C à -100°C.

Une deuxième rampe de chauffage est appliquée à 10°C/min de -100°C à 200°C.

La température de transition vitreuse est donnée par la température du point milieu, selon la méthode des 3 tangentes.

Des modes de réalisation vont maintenant être détaillés dans les exemples qui suivent. Il est précisé que ces exemples illustratifs ne limitent d'aucune façon la portée de la présente invention.

### Exemples

### Préparation des monomères

Le diméthylcarbonate d'isosorbide (A1) et le dimère de diméthylcarbonate d'isosorbide (A2), utiles au procédé de fabrication de polycarbonate selon l'invention, sont obtenus selon les protocoles décrits ci-après.

### Synthèse 1

On introduit dans un réacteur d'une capacité de 20 litres, chauffé par un bain thermostaté à fluide caloporteur, muni d'un système d'agitation mécanique à pale, d'un système de contrôle de la température du milieu réactionnel et d'une colonne de rectification surmontée d'une tête de reflux, 800 g d'isosorbide (5,47 mol) puis 19724 g de carbonate de diméthyle (= 40 équivalents molaires par rapport à l'isosorbide) et 2266 g de carbonate de potassium. On chauffe le mélange réactionnel pendant une heure à reflux total, temps au bout duquel la température des vapeurs en tête de colonne atteint 64°C, avant de débuter l'élimination du méthanol formé. On maintient ensuite le chauffage du milieu réactionnel à une température comprise entre 68 °C et 75 °C pendant 13 heures, temps au bout duquel la température des vapeurs en tête de colonne atteint 90 °C et se stabilise à cette température (point d'ébullition du carbonate de diméthyle). C'est le signe que la réaction de transestérification est terminée et qu'il ne se forme plus de méthanol. On filtre le milieu réactionnel afin d'en éliminer le carbonate de potassium en suspension. Après distillation du carbonate de diméthyle en excès, on récupère un solide blanc qui contient 94 % de diméthylcarbonate d'isosorbide (DMCI) et 6 % de dimères, ces pourcentages étant déterminés par CPG. Le solide est exempt d'isosorbide n'ayant pas réagi.

### Synthèse 2

On répète la Synthèse 1 avec la seule différence que l'on utilise 20 équivalents de carbonate de diméthyle. La composition du solide blanc récupéré après distillation du carbonate de diméthyle en excès est présentée ci-après.

### Synthèse 3

On répète la Synthèse 1 avec la seule différence que l'on utilise 10 équivalents de carbonate de diméthyle. La composition du solide blanc récupéré après distillation du carbonate de diméthyle en excès est présentée ci-après.

| Ex. | Ratio DMC /isosorbide | DMCI | Dimères DMCI |
|---|---|---|---|
| 1 | 40 | 94 % | 6 % |
| 2 | 20 | 91,5 % | 8,5 % |
| 3 | 10 | 79 % | 21 % |

### Synthèse 4

On distille sous vide poussé (< 1 mBar) une partie du produit obtenu selon la Synthèse 1 sur un évaporateur à film raclé en configuration « short patch ». L'évaporateur est chauffé à 140°C et le produit est introduit à 70°C avec un débit de 140 g/h. Le distillat obtenu est un solide blanc contenant 100% en poids de diméthylcarbonate d'isosorbide et ne contient aucune trace de dimères. Le résidu de distillation est un produit comprenant 4,5% de DMCI résiduel et 95,5% de dimères.

### Préparation de polycarbonates

### Exemple 1 (comparatif)

On introduit, dans un réacteur d'une capacité de 100 ml, chauffé par un bain thermostaté à fluide caloporteur, muni d'un système d'agitation mécanique à pales, d'un système de contrôle de la température du milieu réactionnel, d'une tubulure d'introduction d'azote, d'une tête de distillation reliée à un condenseur et à un récipient pour recueillir les condensats, et d'un système de mise sous vide avec régulation, une quantité de 26.2 g (0,10 mole) de DMCI exempt de dimères (A2) , 14.6 g (0,10 mole) d'isosorbide (B) et 0,0069 g (9.99x10⁻⁵ mole) de 1,2,4-triazole. On met l'installation sous atmosphère d'azote et on chauffe le milieu réactionnel par l'intermédiaire du fluide caloporteur. On monte progressivement la température en effectuant des paliers de 2h30 mn à 170°C, 1h à 200°C, 1h à 220°C et 1h à 235°C. La montée en température entre chaque palier se fait en 30 minutes. Au cours de la réaction, on observe une distillation du méthanol. A la fin du palier de 235°C, on met l'installation sous vide pendant 1h (pression résiduelle inferieure à 300 Pascal) en maintenant la température de 235°C, afin de continuer la réaction, poursuivre la distillation et éliminer les espèces résiduelles de bas poids moléculaire. Après refroidissement du milieu réactionnel, on obtient un polymère de transition vitreuse de 89°C.

Les conditions opératoires sont reprises dans le tableau 1 ci-après.

### Exemple 2 (selon l'invention)

On répète l'exemple 1 avec la seule différence que le DMCI est remplacé par une composition (A), constituée de DMCI (A1) et de dimères de DMCI (A2) et contenant 8.5% en poids de dimères, dans des proportions telles que le ratio molaire ((A1) + (A2)) / (B) reste égal à 1. On obtient un polymère présentant une température de transition vitreuse de 130°C.

Les conditions opératoires sont reprises dans le tableau 1 ci-après.

### Exemple 3 (selon l'invention)

On répète l'exemple 1 avec la seule différence que le DMCI est remplacé par une composition (A), constituée de DMCI (A1) et de dimères de DMCI (A2) et contenant 21% en poids de dimères, dans des proportions telles que le ratio molaire ((A1) + (A2)) / (B) reste égal à 1. On obtient un polymère présentant une température de transition vitreuse de 120°C.

Les conditions opératoires sont reprises dans le tableau 1 ci-après.

### Exemple 4 (selon l'invention)

On répète l'exemple 1 avec la seule différence que le DMCI est remplacé par une composition (A), constituée de DMCI (A1) et de dimères de DMCI (A2) et contenant 95,5% en poids de dimères, dans des proportions telles que le ratio molaire ((A1) + (A2)) / (B) reste égal à 1. On obtient un polymère présentant une température de transition vitreuse de 108°C.

Les conditions opératoires sont reprises dans le tableau 1 ci-après.

**Tableau 1**

| Exemples | %m (A2)/((A1)+(A2)) | (B) | Nature du catalyseur | Tᵥ (°C) |
|---|---|---|---|---|
| 1 | 0% | isosorbide | 1, 2, 4-triazole | 89°C |
| 2 | 8,5% | isosorbide | 1, 2, 4-triazole | 130°C |
| 3 | 21% | isosorbide | 1, 2, 4-triazole | 120°C |
| 4 | 95,5% | isosorbide | 1, 2, 4-triazole | 108°C |

### Exemple 5 (comparatif)

On introduit, dans un réacteur identique à l'exemple 1, 31.9 g (0,122 mole) de DMCI exempt de dimères (A2), 17.8 g (0,122 mole) d'isosorbide et 0.0084 g (1.22x10⁻⁴ mole) de 1,2,4-triazole. On met l'installation sous atmosphère d'azote et on chauffe le milieu réactionnel par l'intermédiaire du fluide caloporteur. On monte progressivement la température en effectuant des paliers de 2h à 130°C et 2h à 170°C. La montée en température entre chaque palier se fait en 30 minutes.

Au cours de la réaction, on observe une distillation du méthanol. A la fin du palier de 170°C, on monte la température à 220°C en 30 min. Lorsque celle-ci est atteinte, on met l'installation sous vide pendant 2h (pression résiduelle inférieure à 300 Pascal) en maintenant la température de 220°C, afin de poursuivre la distillation et éliminer les espèces résiduelles de bas poids moléculaire. Après refroidissement du milieu réactionnel, on obtient un polymère présentant une température de transition vitreuse de 76°C.

Les conditions opératoires sont reprises dans le tableau 2 ci-après.

### Exemple 6 (selon l'invention)

On répète l'exemple 5 avec la seule différence que le DMCI est remplacé par une composition (A), constituée de DMCI (A1) et de dimères de DMCI (A2) et contenant 6 % en poids de dimères, dans des proportions telles que le ratio molaire ((A1) + (A2)) / (B) reste égal à 1.

On obtient un polymère présentant une température de transition vitreuse de 103°C.

Les conditions opératoires sont reprises dans le tableau ci-après.

**Tableau 2**

| Exemples | %masse (A2)/((A1)+(A2)) | Nature de (B) | Nature du catalyseur | Tᵥ (°C) |
|---|---|---|---|---|
| 5 | 0% | isosorbide | 1,2,4-triazole | 76°C |
| 6 | 6% | isosorbide | 1,2,4-triazole | 103°C |

### Exemple 7 (selon l'invention)

On introduit, dans un réacteur identique à l'exemple 1, une quantité de 53,3 g (0,195 mole) d'une composition de DMCI et de dimères de DMCI, cette composition contenant 8.5% en poids de dimères, 28.4 g (0,195 mole) d'isosorbide soit un ratio molaire de 1 pour 1 entre le diméthylcarbonate d'isosorbide et le co-monomère et 0,0038 g (1.16x10⁻⁵ mole) de carbonate de césium soit 0.006% molaire par rapport à (A). On met l'installation sous atmosphère d'azote et on chauffe le milieu réactionnel par l'intermédiaire du fluide caloporteur. On monte progressivement la température en effectuant des paliers de 2h30 mn à 170°C, 1h à 200°C, 1h à 220°C et 1h à 235°C. La montée en température entre chaque palier se fait en 30 minutes. Au cours de la réaction, on observe une distillation du méthanol. A la fin du palier de 235°C, on met l'installation sous vide pendant 1h (pression résiduelle inférieure à 300 Pascal) en maintenant la température de 235°C, afin de poursuivre la distillation et éliminer les espèces résiduelles de bas poids moléculaire. Après refroidissement du milieu réactionnel, on obtient un polymère présentant une température de transition vitreuse de 145°C.

Les conditions opératoires sont reprises dans le tableau 3 ci-après.

### Exemple 8 (selon l'invention)

On répète l'exemple 7 avec la seule différence que la composition (A) contient 21 % en poids de dimères (A2), (A) et (B) étant dans des proportions telles que le ratio molaire ((A1) + (A2)) / (B) reste égal à 1.

On obtient un polymère présentant une température de transition vitreuse de 136°C.

Les conditions opératoires sont reprises dans le tableau 3 ci -après.

### Exemple 9 (selon l'invention)

On répète l'exemple 7 avec la seule différence que l'on remplace l'isosorbide par le 1,4 cyclohexanedimethanol (1,4 CHDM).

On obtient un polymère présentant une température de transition vitreuse de 68°C.

Les conditions opératoires sont reprises dans le tableau 3 ci-après.

### Exemple 10 (selon l'invention)

On répète l'exemple 7 avec la seule différence que l'on remplace l'isosorbide par l'éthylène glycol.

On obtient un polymère présentant une température de transition vitreuse de 32°C.

Les conditions opératoires sont reprises dans le tableau 3 ci-après.

### Exemple 11 (selon l'invention)

On répète l'exemple 7 avec la seule différence que l'on remplace l'isosorbide par un mélange 50/50 molaire isosorbide/éthylène glycol (EG).

On obtient un polymère présentant une température de transition vitreuse de 77°C.

Les conditions opératoires sont reprises dans le tableau 3 ci-après.

### Exemple 12 (selon l'invention)

On répète l'exemple 7 avec la seule différence que le ratio molaire (A) / (B) est de 0,8 pour 1.

On obtient un polymère présentant une température de transition vitreuse de 125°C.

Les conditions opératoires sont reprises dans le tableau 3 ci-après.

### Exemple 13 (selon l'invention)

On répète l'exemple 7 avec la seule différence que le ratio molaire (A) / (B) est de 1,25 pour 1.

On obtient un polymère présentant une température de transition vitreuse de 140°C.

Les conditions opératoires sont reprises dans le tableau 3 ci-après.

### Exemple 14 (selon l'invention)

On répète l'exemple 13 avec la seule différence que le % molaire de catalyseur est de 0.002%.

On obtient un polymère présentant une température de transition vitreuse de 127°C.

Les conditions opératoires sont reprises dans le tableau ci-après.

**Tableau 3**

| Exemple | %m (A2)/((A1)+ (A2)) | Nature de (B) | Ratio molaire (A) / (B) | %mol catalyseur/(A) | Tᵥ (°C ) |
|---|---|---|---|---|---|
| 7 | 8,5% | isosorbide | 1 | 0,006% | 145 |
| 8 | 21% | isosorbide | 1 | 0,006% | 136 |
| 9 | 8,5% | 1,4 CHDM | 1 | 0,006% | 68 |
| 10 | 8,5% | EG | 1 | 0,006% | 32 |
| 11 | 8,5% | Isosorbide (50)/ EG (50) (mol/mol) | 1 | 0,006% | 77 |
| 12 | 8,5% | isosorbide | 0,8 | 0,006% | 125 |
| 13 | 8,5% | isosorbide | 1,25 | 0,006% | 140 |
| 14 | 8,5% | isosorbide | 1,25 | 0,002% | 127 |

## Revendications

1. Procédé de fabrication d'un polycarbonate **caractérisé en ce qu'**il comprend :
- une étape (1) d'introduction, dans un réacteur, d'une composition (A) comprenant au moins un carbonate de dianhydrohexitol portant deux fonctions carbonate d'alkyle, ladite composition (A) comprenant par rapport à la somme de (A1) et (A2) :
▪ de 0 à 99,9% en poids, préférentiellement de 70 à 99,9% en poids, de monomères (A1) de formule : 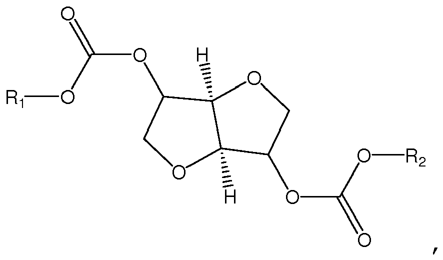
▪ et de 0,1 à 100% en poids, préférentiellement de 0,1 à 30% en poids, de monomères (A2) de formule : 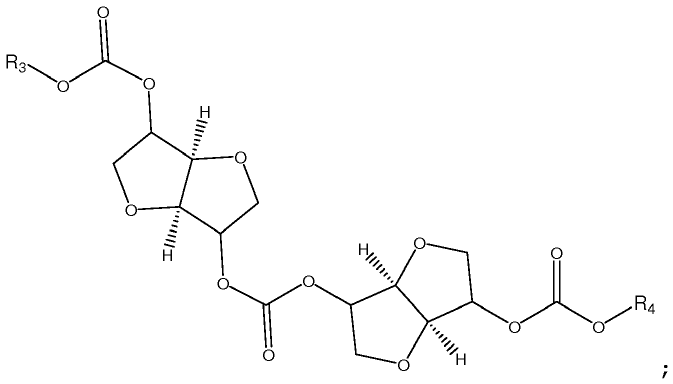 et R1, R2, R3 et R4 étant des groupements alkyle identiques ou différents ;
- une étape (2) d'introduction d'un diol ou d'un mélange de diols (B) ;
- une étape (3) ultérieure de polycondensation par transestérification du mélange de monomères comprenant (A2), (B) et éventuellement (A1) ;
- une étape (4) de récupération du polycarbonate formé lors de l'étape (3) ;
ledit polycarbonate récupéré à l'étape (4) présentant une température de transition vitreuse supérieure ou égale à 25°C.

2. Procédé selon la revendication 1, **caractérisé en ce que** les groupements alkyle R1, R2, R3 et R4 portés par (A1) et (A2) comprennent de 1 à 10 atomes de carbone, avantageusement de 1 à 6, par exemple de 1 à 4, tout particulièrement sont choisis parmi les groupements méthyle et éthyle.

3. Procédé selon l'une des revendications précédentes, **caractérisé en ce que** les carbonates de dianhydrohexitol de la composition (A) sont des carbonate d'isosorbide.

4. Procédé selon l'une des revendications précédentes, **caractérisé en ce que** la composition (A) introduite lors de l'étape (1) comprend, par rapport au poids total des monomères (A1) et (A2) :
▪ de 75 à 99%, avantageusement de 80 à 97%, par exemple de 85 à 95% de (A1); et
▪ de 1 à 25%, avantageusement de 3 à 20%, par exemple de 5 à 15% de (A2).

5. Procédé selon l'une des revendications précédentes, **caractérisé en ce que** le monomère (B) comprend au moins 1% en moles de diol cyclique, de préférence au moins 20%, avantageusement au moins 50%, préférentiellement au moins 80%, tout préférentiellement est constitué de diol cyclique ou d'un mélange de diols cycliques.

6. Procédé selon la revendication précédente, **caractérisé en ce que** le diol cyclique compris dans (B) est non aromatique.

7. Procédé selon la revendication 5 ou 6, **caractérisé en ce que** le diol cyclique compris dans (B) comprend des cycles à 5 ou 6 chaînons, préférentiellement choisi parmi l'isosorbide, l'isomannide, l'isoidide, le 1,2-cyclohexanediméthanol, le 1,3-cyclohexanediméthanol, et le 1,4-cyclohexanediméthanol.

8. Procédé selon l'une des revendications précédentes, **caractérisé en ce que** le ratio molaire de (A1) + (A2) / (B) va de 0,7 à 1,3, préférentiellement de 0,9 à 1,1.

9. Procédé selon l'une des revendications précédentes, **caractérisé en ce que** la somme de (A1), (A2) et (B) constitue plus de 90% en moles de la totalité des monomères introduits dans le réacteur.

10. Procédé selon l'une des revendications précédentes, **caractérisé en ce que** la composition (A) comprend plus de 75% en moles, de préférence plus de 90 % en moles de monomères (A1) et (A2).

11. Procédé selon l'une des revendications précédentes, **caractérisé en ce que** le réacteur est régulé à une température allant de 100°C à 250°C durant l'étape (3), préférentiellement de 150 à 235°C.

12. Procédé selon l'une des revendications précédentes, **caractérisé en ce que** l'étape (3) se fait en présence d'un catalyseur de transestérification, avantageusement un catalyseur comprenant au moins un ion de métal alcalin ou de métal alcalino-terreux, un ion ammonium quaternaire, un ion phosphonium quaternaire, un composé azoté cyclique, un composé basique à base de bore ou un composé basique à base de phosphore, avantageusement choisi parmi le carbonate de césium, les triazoles et l'hydroxyde de tetraméthylammonium.

13. Procédé selon la revendication précédente, **caractérisé en ce que** la quantité du catalyseur va de 10⁻⁷% à 1%, préférentiellement de 10⁻⁴% à 0,5% en moles, rapporté à la somme de (A1) et (A2).

14. Procédé selon l'une des revendications précédentes, **caractérisé en ce qu'**au moins une partie de l'étape (3) est réalisée à une pression allant de 30 kPa à 110kPa, avantageusement de 90 à 105 kPa, par exemple à pression atmosphérique.

15. Procédé selon l'une des revendications précédentes, **caractérisé en ce que** le polycarbonate récupéré à l'étape (4) présente une température de transition vitreuse supérieure ou égale à 50°C, avantageusement de 100 à 180°C, par exemple de 120 à 170°C.

16. Utilisation pour la fabrication d'un polycarbonate présentant une température de transition vitreuse supérieure ou égale à 25°C, d'une composition (A) comprenant au moins un carbonate de dianhydrohexitol portant deux fonctions carbonate d'alkyle, ladite composition (A) comprenant par rapport à la somme de (A1) et (A2) :
▪ de 0 à 99,9% de monomères (A1) de formule, préférentiellement de 70 à 99,9% : 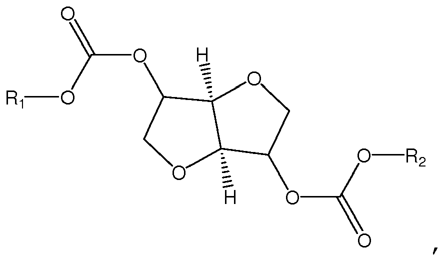
▪ et de 0,1 à 100% de monomères (A2) de formule, préférentiellement de 0,1 à 30% : 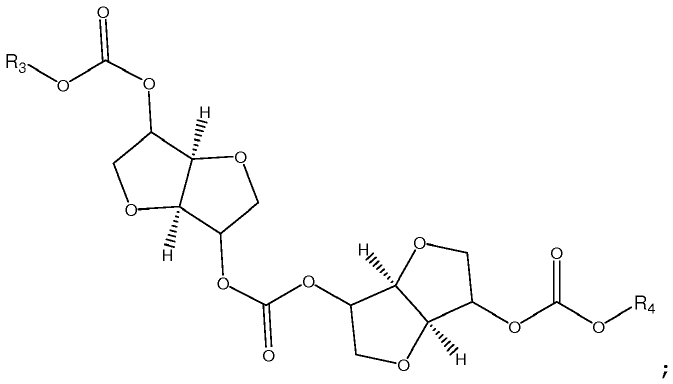 et R1, R2, R3 et R4 étant des groupements alkyle identiques ou différents.

## Patentansprüche

1. Verfahren zur Herstellung eines Polycarbonats, **dadurch gekennzeichnet, dass** es umfasst:
- einen Schritt (1) zum Einführen einer Zusammensetzung (A) in einen Reaktor umfassend mindestens ein Dianhydrohexitol-Carbonat mit zwei Alkylcarbonatfunktionen, wobei die Zusammensetzung (A), bezogen auf die Summe von (A1) und (A2), umfasst:
• 0 bis 99,9 Gewichts-%, vorzugsweise 70 bis 99,9 Gewichts-% von Monomeren (A1) der Formel: 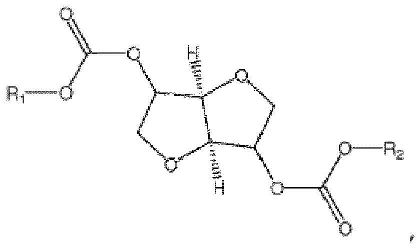
• und 0,1 bis 100 Gewichts-%, vorzugsweise 0,1 bis 30 Gewichts-% von Monomeren (A2) der Formel: 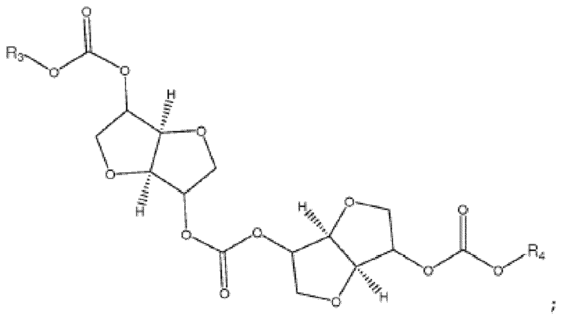
wobei R1, R2, R3 und R4 gleiche oder verschiedene Alkylgruppen sind;
- einen Schritt (2) zum Einführen eines Diols oder eines Gemischs von Diolen (B),
- einen anschließenden Polykondensationsschritt (3) durch Umesterung der MonomerMischung umfassend (A2) und (B) und gegebenenfalls (A1);
- einen Schritt (4) zum Erhalten des in Schritt (3) gebildeten Polycarbonats;
wobei das in Schritt (4) erhaltene Polycarbonat eine Glasübergangstemperatur höher als oder gleich 25°C aufweist.

2. Verfahren nach Anspruch 1, **dadurch gekennzeichnet, dass** die Alkylgruppen R1, R2, R3 und R4 von (A1) und (A2) 1 bis 10 Kohlenstoffatomen, vorzugsweise 1 bis 6, beispielsweise 1 bis 4 umfasst, insbesondere sind sie ausgewählt aus den Methyl- und Ethylgruppen.

3. Verfahren nach einem der vorhergehenden Ansprüche, **dadurch gekennzeichnet, dass** die Dianhydrohexitol-Carbonate der Zusammensetzung (A) Isosorbid-Carbonate sind.

4. Verfahren nach einem der vorhergehenden Ansprüche, **dadurch gekennzeichnet, dass** die in Schritt (1) eingeführte Zusammensetzung (A) umfasst, bezogen auf das Gesamtgewicht von Monomeren (A1) und (A2):
• von 75 bis 99 %, vorzugsweise von 80 bis 97 %, beispielsweise von 85 bis 95 % von (A1); und
• von 1 bis 25 %, vorzugsweise von 3 bis 20 %, beispielsweise von 5 bis 15 % von (A2).

5. Verfahren nach einem der vorhergehenden Ansprüche, **dadurch gekennzeichnet, dass** das Monomer (B) mindestens 1 Mol-% des cyclischen Diols, vorzugsweise mindestens 20%, vorzugsweise mindestens 50%, vorzugsweise mindestens 80% umfasst, besonders bevorzugt besteht es aus cyclischem Diol oder einer Mischung von cyclischen Diolen.

6. Verfahren nach einem der vorhergehenden Ansprüche, **dadurch gekennzeichnet, dass** das in (B) umfasste cyclische Diol nicht aromatisch ist.

7. Verfahren nach Anspruch 5 oder 6, **dadurch gekennzeichnet, dass** das in (B) umfasste cyclische Diol 5- oder 6-gliedrigen Ringe umfasst, vorzugsweise sind sie ausgewählt aus Isosorbid, Isomannid, Isoidid, 1,2-Cyclohexandimethanol, 1,3-Cyclohexandimethanol und 1,4-Cyclohexandimethanol.

8. Verfahren nach einem der vorhergehenden Ansprüche, **dadurch gekennzeichnet, dass** das Molverhältnis (A1) + (A2) / (B) zwischen 0,7 bis 1,3, vorzugsweise zwischen 0,9 bis 1,1 liegt.

9. Verfahren nach einem der vorhergehenden Ansprüche, **dadurch gekennzeichnet, dass** die Summe von (A1), (A2) und (B) mehr als 90 Mol-% der gesamten in den Reaktor eingeführten Monomere darstellt.

10. Verfahren nach einem der vorhergehenden Ansprüche, **dadurch gekennzeichnet, dass** die Zusammensetzung (A) mehr als 75 Mol-%, vorzugsweise mehr als 90 Mol-% Monomere (A1) und (A2) umfasst.

11. Verfahren nach einem der vorhergehenden Ansprüche, **dadurch gekennzeichnet, dass** der Reaktor während des Schritts (3) auf eine Temperatur von 100 °C bis 250 °C, vorzugsweise von 150 bis 235 °C eingestellt wird.

12. Verfahren nach einem der vorhergehenden Ansprüche, **dadurch gekennzeichnet, dass** der Schritt (3) in Gegenwart eines Umesterungskatalysators, vorzugsweise eines Katalysators erfolgt, welcher mindestens ein Alkalimetall- oder ein Erdalkalimetallion, ein quaternäres Ammoniumion, ein quaternäres Phosphoniumion, eine cyclische Stickstoffverbindung, eine basische Verbindung auf Borbasis oder eine basische Verbindung auf Phosphorbasis umfasst, vorzugsweise ausgewählt aus dem Cäsiumcarbonat, den Triazolen und dem Tetramethylammoniumhydroxid.

13. Verfahren nach vorhergehenden Ansprüche, **dadurch gekennzeichnet, dass** die Menge des Katalysators von 10⁻⁷ % bis 1%, vorzugsweise von 10⁻⁴ % bis 0,5 Mol-%, bezogen auf die Summe von (A1) und (A2), beträgt.

14. Verfahren nach einem der vorhergehenden Ansprüche, **dadurch gekennzeichnet, dass** zumindest ein Teil des Schritts (3) bei einem Druck im Bereich von 30 kPa bis 110 kPa, vorzugsweise von 90 bis 105 kPa, zum Beispiel bei atmosphärischem Druck durchgeführt wird.

15. Verfahren nach einem der vorhergehenden Ansprüche, **dadurch gekennzeichnet, dass** das in Schritt (4) erhaltene Polycarbonat eine Glasübergangstemperatur höher als oder gleich 50 °C, vorzugsweise von 100 bis 180 °C, beispielsweise von 120 bis 170 °C, aufweist.

16. Verwendung einer Zusammensetzung (A) zur Herstellung eines Polycarbonats, welcher eine Glasübergangstemperatur höher als oder gleich 25 °C aufweist, umfassend mindestens ein Dianhydrohexitol-Carbonat mit zwei Alkylcarbonatfunktionen, wobei die Zusammensetzung (A), bezogen auf die Summe von (A1) und (A2), umfasst,:
• 0 bis 99,9 %, vorzugsweise 70 bis 99,9 % von Monomeren (A1) der Formel: 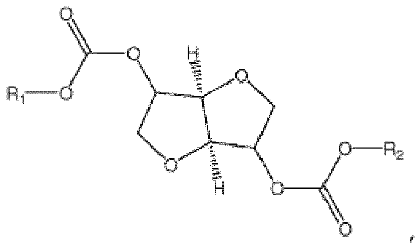
• und 0,1 bis 100 %, vorzugsweise 0,1 bis 30 % von Monomeren (A2) der Formel: 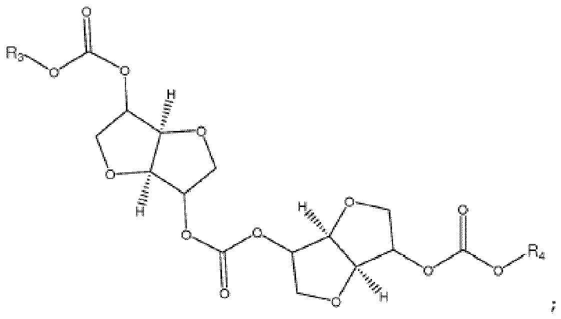 wobei R1, R2, R3 und R4 gleiche oder verschiedene Alkylgruppen sind.

## Claims

1. A process for manufacturing a polycarbonate, **characterized in that** it comprises:
- a step (1) of introducing, into a reactor, a composition (A) comprising at least one dianhydrohexitol carbonate bearing two alkyl carbonate functions, said composition (A) comprising, relative to the sum of (A1) plus (A2):
▪ from 0 to 99.9% by weight and preferentially from 70% to 99.9% by weight of monomers (A1) of formula: 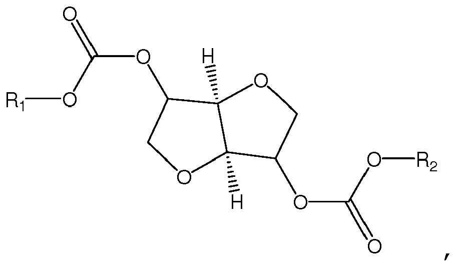
▪ and from 0.1% to 100% by weight and preferentially from 0.1% to 30% by weight of monomers (A2) of formula: 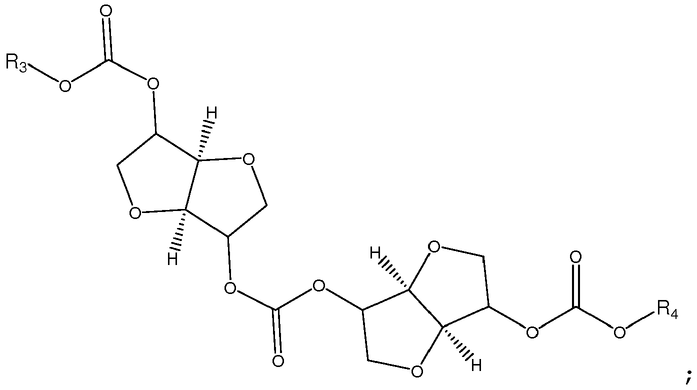 and R1, R2, R3 and R4 being identical or different alkyl groups;
- a step (2) of introducing a diol or a mixture of diols (B) ;
- a subsequent step (3) of polycondensation by transesterification of the monomer mixture comprising (A2), (B) and optionally (A1);
- a step (4) of recovering the polycarbonate formed in step (3);
said polycarbonate recovered in step (4) having a glass transition temperature greater than or equal to 25°C.

2. The process as claimed in claim 1, **characterized in that** the alkyl groups R1, R2, R3 and R4 borne by (A1) and (A2) comprise from 1 to 10 carbon atoms, advantageously from 1 to 6, for example from 1 to 4, and are most particularly chosen from methyl and ethyl groups.

3. The process as claimed in one of the preceding claims, **characterized in that** the dianhydrohexitol carbonates of composition (A) are isosorbide carbonates.

4. The process as claimed in one of the preceding claims, **characterized in that** composition (A) introduced during step (1) comprises, relative to the total weight of monomers (A1) and (A2):
▪ from 75% to 99%, advantageously from 80% to 97%, for example from 85% to 95%, of (A1); and
▪ from 1% to 25%, advantageously from 3% to 20%, for example from 5% to 15%, of (A2).

5. The process as claimed in one of the preceding claims, **characterized in that** monomer (B) comprises at least 1 mol% of cyclic diol, preferably at least 20 mol%, advantageously at least 50 mol% and preferentially at least 80 mol%, and most preferentially consists of cyclic diol or of a mixture of cyclic diols.

6. The process as claimed in the preceding claim, **characterized in that** the cyclic diol included in (B) is nonaromatic.

7. The process as claimed in claim 5 or 6, **characterized in that** the cyclic diol included in (B) comprises 5- or 6-membered rings, preferentially chosen from isosorbide, isomannide, isoidide, 1,2-cyclohexanedimethanol, 1,3-cyclohexanedimethanol and 1,4-cyclohexanedimethanol.

8. The process as claimed in one of the preceding claims, **characterized in that** the mole ratio of (A1) + (A2)/(B) ranges from 0.7 to 1.3 and preferentially from 0.9 to 1.1.

9. The process as claimed in one of the preceding claims, **characterized in that** the sum of (A1), (A2) and (B) constitutes more than 90 mol% of the total amount of monomers introduced into the reactor.

10. The process as claimed in one of the preceding claims, **characterized in that** composition (A) comprises more than 75 mol% and preferably more than 90 mol% of monomers (A1) and (A2).

11. The process as claimed in one of the preceding claims, **characterized in that** the reactor is adjusted to a temperature ranging from 100°C to 250°C during step (3), preferentially from 150 to 235°C.

12. The process as claimed in one of the preceding claims, **characterized in that** step (3) takes place in the presence of a transesterification catalyst, advantageously a catalyst comprising at least one alkali metal or alkaline-earth metal ion, a quaternary ammonium ion, a quaternary phosphonium ion, a cyclic nitrogen compound, a basic boron-based compound or a basic phosphorus-based compound, advantageously chosen from cesium carbonate, triazoles and tetramethylammonium hydroxide.

13. The process as claimed in the preceding claim, **characterized in that** the amount of the catalyst ranges from 10⁻⁷ mol% to 1 mol%, preferentially from 10⁻⁴ mol% to 0.5 mol%, relative to the sum of (A1) and (A2).

14. The process as claimed in one of the preceding claims, **characterized in that** at least one part of step (3) is performed at a pressure ranging from 30 kPa to 110 kPa and advantageously from 90 to 105 kPa, for example at atmospheric pressure.

15. The process as claimed in one of the preceding claims, **characterized in that** the polycarbonate recovered in step (4) has a glass transition temperature greater than or equal to 50°C, and advantageously from 100 to 180°C, for example from 120 to 170°C.

16. The use for manufacturing a polycarbonate, having a glass transition temperature greater than or equal to 25°C, of a composition (A) comprising at least one dianhydrohexitol carbonate bearing two alkyl carbonate functions, said composition (A) comprising, relative to the sum of (A1) and (A2):
▪ from 0 to 99.9% of monomers (A1) of formula, preferentially from 70% to 99.9%: 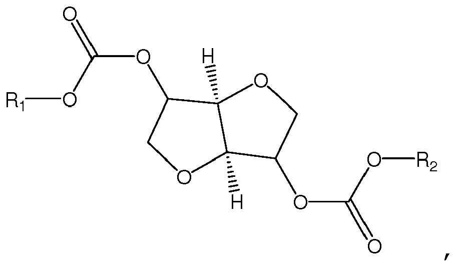
▪ and from 0.1% to 100% of monomers (A2) of formula, preferentially from 0.1% to 30%: 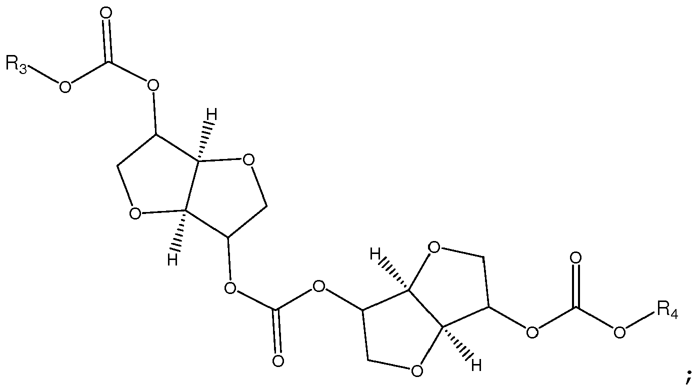 and R1, R2, R3 and R4 being identical or different alkyl groups.
